# EUROPEAN PATENT APPLICATION

(11) **EP 2 071 002 A1**
(43) Date of publication of application: **17.06.2009**
(21) Application number: 07767272.3
(22) Date of filing: 20.06.2007
(51) Int. Cl.: C09J 121/00, C09J 11/04, C09J 11/08, C09J 153/02

(54) **THERMALLY CONDUCTIVE THERMOPLASTIC ADHESIVE COMPOSITION**

(30) Priority: 21.06.2006 JP 2006171313
(71) Applicant: Hitachi Kasei Polymer Co., Ltd., Chiyoda-Ku Tokyo 101-0047 (JP)
(72) Inventor: HASEGAWA, Katsuro, Kitakatsushika-Gun Saitama 343-0114 (JP); KISHIMOTO, Takuya, Utsunomiya-Shi Tochigi 321-0966 (JP)
(74) Representative: Killin, Stephen James
(86) International application number: PCT/JP2007/062434
(87) International publication number: WO 2007/148729

(57) **Abstract**

It is an object of the present invention to provide a thermally conductive thermoplastic pressure sensitive adhesive composition excellent in thermal conductivity, which can be used for lamination of a glass panel of a plasma display or a radiator plate of electronic devices etc., and can disassemble easily in product repair or after ending of life cycle. The present invention is a thermally conductive thermoplastic pressure sensitive adhesive composition **characterized by** having, as essential components: (A) liquid rubber; (B) at least either of styrene-based rubber and an amorphous olefin-based resin; (C) a tackifier resin; and (D) graphite, where formulation amount of graphite of the (D) component is in a range of from 30 to 75% by mass relative to total mass of the composition.

## Description

### TECHNICAL FIELD

The present invention relates to a thermally conductive thermoplastic pressure sensitive adhesive composition excellent in thermal conductivity that is used for lamination of a glass panel of a plasma display or a radiator plate of electronic devices etc., and in more detail, relates to a thermally conductive thermoplastic pressure sensitive adhesive composition that can disassemble easily in product repair or after ending of life cycle.

### BACKGROUND ART

In recent years, there may be the cases where a glass panel of a plasma display, or a substrate surface mounted with high brightness LED, or a member such as high performance CPU reaches high temperature, and there has been increasing electronics devices requiring heat release by any kind of methods.

In particular, in the case of a plasma display, generation of temperature unevenness in a glass panel gives influence also on color unevenness of a view screen, therefore rapid heat release is necessary.

In general, in the case of a plasma display, there has been used a method for laminating a glass panel and a metal frame of aluminum or iron etc., with a both-sided pressure sensitive adhesive tape having thermal conductivity. In this way, by release of heat generated at a glass panel to a metal frame, local heat elevation inside a glass panel is suppressed, temperature of a glass panel is made uniform, and color unevenness of a view screen is suppressed.

As the above both-sided pressure sensitive adhesive tape having thermal conductivity, in general, there has been used one containing thermally conductive fillers such as alumina or aluminum hydroxide into acryl-based pressure sensitive adhesives. As such a both-sided pressure sensitive adhesive tape having thermal conductivity, acryl-based pressure sensitive adhesives containing a cross-linking agent is used in order to support load of a panel.

In the case of disassembling a glass panel of a plasma display and a metal frame which were laminated by using the above both-sided pressure sensitive adhesive tape having thermal conductivity, it is thought of a method for peeling by weakening tackiness of the both-sided pressure sensitive adhesive tape by exposing to high temperature, or a method for dissolving pressure sensitive adhesives of a both-sided pressure sensitive adhesive tape with an organic solvent etc.. However, a both-sided pressure sensitive adhesive tape having thermal conductivity, as described above, cannot be disassembled easily, because a cross-linking agent is used.

In view of such a problem, in JP-A-2000-290615, instead of the above both-sided pressure sensitive adhesive tape having thermal conductivity, a sheet having tackiness has been proposed, which is obtained by using a thermoplastic elastic heat dissipating composition containing at least either of a styrene-based elastic polymer and an olefin-based elastic polymer, a tackifier, a softening agent such as paraffinic oil, and a thermally conductive material such as alumina, and by forming it to sheet-like shape.

In addition, as other than this, in JP-A-2004-146106, there has been proposed one obtained by using a thermoplastic elastic heat releasing compound containing styrene-based thermoplastic elastomer, a softening agent such as paraffinic oil, and a thermally conductive material such as aluminum hydroxide, and by forming it to sheet-like shape, and still more by forming it to sheet-like shape by providing a sticky layer at the surface thereof.

On the other hand, in JP-A-10-198287, there has been proposed lamination of a glass panel of a plasma display and a metal frame, by using black-colored adhesives, aiming at heat release by heat radiation.

### DISCLOSURE OF INVENTION

Environment where a plasma display is used is various, and in the case where it is used at temperature reaching equal to or higher than 40°C, temperature of a glass panel may sometimes reach about 80°C. In the case where a sheet having tackiness softened a styrene-based elastic polymer such as proposed in JP-A-2000-290615 by using a softening agent such as paraffinic oil is used for lamination of a glass panel of a plasma display and a metal frame, there was a problem that heat resistant retention force can not necessarily be said sufficient, because a softening agent such as paraffinic oil is contained in a thermally conductive material sheet.

In addition, such a thermally conductive material sheet having tackiness, including a both-sided pressure sensitive adhesive tape having thermal conductivity such as described above, had a problem also that production cost was high, as compared with the case where a pressure sensitive adhesive composition is coated in-line as it is, caused by cost increase or low yield in sheet formation, because of use by forming to a sheet-like shape in advance. In addition, releasingpaper used at the sticky surface also had a problem that reuse was difficult and it became industrial waste as it is.

Still more, in the case where alumina is used as a filler of a thermally conductive sheet, because hardness of alumina particles is very high, it also became one factor of production cost push, from the view point that parts contacting with a pressure sensitive adhesive composition, such as a stirrer of a kneader etc., or a gear pump, tend to be worn easily, thus increasing equipment cost, in producing a thermally conductive sheet, or in a sheet forming process.

In addition, also in the case where aluminum hydroxide is used as a thermally conductive material, as in JP-A-2004-146106, as well as a problem of wear similarly as in the above, it was difficult to attain, for example, a thermal conductivity of equal to or higher than 0.8 W/m·K, because of low thermal conductivity of aluminum hydroxide.

Still more, a method described in JP-A-10-198287 did not refer to any of heat resistant retention force nor thermal conductivity, in particular, anisotropy of thermal conductivity, and it was difficult to solve the above problem only by making adhesives to black color.

The present invention has been proposed in view of the above conventional technology, and it is an object of the present invention to provide a thermally conductive thermoplastic pressure sensitive adhesive composition excellent in thermal conductivity, which can be used, for example, in lamination of a glass panel of a plasma display and a member requiring thermal conductivity, such as a metal frame, having excellent heat resistant retention force at a practical use temperature region, providing low production cost in mass production, having thermal conductivity sufficient to transfer the heat generated at a glass panel to a metal frame, and still more enabling a structure body to disassemble easily by melting under heating in product repair or after ending of life cycle.

The present inventors have intensively studied a way to attain the above objectives and found that a thermally conductive thermoplastic pressure sensitive adhesive composition characterized by having, as essential components: (A) liquid rubber; (B) at least either of styrene-based rubber and an amorphous olefin-based resin; (C) a tackifier resin; and (D) graphite, where formulation amount of graphite of the (D) component is in a range of from 30 to 75% by mass relative to total mass of the composition, has higher thermal conductivity, as compared with a general sticky thermally conductive sheet used for lamination of a glass panel of a plasma display and a metal frame, as well as a plasma display can disassemble easily in product repair or after ending of life cycle. In addition, the present inventors have found, during the research process, that thermal conductivity of the thermally conductive thermoplastic pressure sensitive adhesive composition of the present invention coated under heating shows anisotropy in the coating surface direction and in a vertical direction to the coating surface direction, and thermal conductivity in the surface direction is higher. The present invention has been completed based on such knowledge.

That is, the present invention is [1] a thermally conductive thermoplastic pressure sensitive adhesive composition characterized by having, as essential components: (A) liquid rubber; (B) at least either of styrene-based rubber and an amorphous olefin-based resin; (C) a tackifier resin; and (D) graphite, where formulation amount of graphite of the (D) component is in a range of from 30 to 75% by mass relative to total mass of the composition.

In addition, the present invention is [2] the thermally conductive thermoplastic pressure sensitive adhesive composition according to the above [1], **characterized in that** formulation amount of liquid rubber of the (A) component is in a range of from 10 to 40% by mass relative to total mass of the composition.

In addition, the present invention is [3] the thermally conductive thermoplastic pressure sensitive adhesive composition according to the above [1] or [2], **characterized in that** graphite of the (D) component is artificial graphite.

In addition, the present invention is [4] the thermally conductive thermoplastic pressure sensitive adhesive composition according to any one of the above [1] to [3], **characterized in that** dibutyl phthalate oil absorption amount of graphite of the (D) component is in a range of from 30 to 200 ml/100 g.

In addition, the present invention is [5] the thermally conductive thermoplastic pressure sensitive adhesive composition according to any one of the above [1] to [4], **characterized in that** average particle diameter of graphite of the (D) component measured by a laser diffraction method is from 0.5 to 250 µm.

In addition, the present invention is [6] the thermally conductive thermoplastic pressure sensitive adhesive composition according to any one of the above [1] to [5], **characterized in that** average aspect ratio of graphite of the (D) component is from 1.2 to 20.

In addition, the present invention is [7] the thermally conductive thermoplastic pressure sensitive adhesive composition according to any one of the above [1] to [6], **characterized in that** thermal conductivity at 23°C in a coating surface direction is equal to or higher than 0.8 W/m·K in the case where the thermally conductive thermoplastic pressure sensitive adhesive composition is coated under heating.

In addition, the present invention is [8] the thermally conductive thermoplastic pressure sensitive adhesive composition according to any one of the above [1] to [7], **characterized in that** thermal conductivity of the thermally conductive thermoplastic pressure sensitive adhesive composition shows anisotropy in the coating surface direction and in a vertical direction to the coating surface direction, in the case where the thermally conductive thermoplastic pressure sensitive adhesive composition is coated under heating, and thermal conductivity in the coating surface direction is higher than thermal conductivity in a vertical direction to the coating surface.

In addition, the present invention is [9] the thermally conductive thermoplastic pressure sensitive adhesive composition according to any one of the above [1] to [8], **characterized in that** volume resistivity is from 10² to 10¹⁴ Ω·cm.

In addition, the present invention is [10] the thermally conductive thermoplastic pressure sensitive adhesive composition according to any one of the above [1] to [9], **characterized in that** Asker C hardness at 23°C is equal to or lower than 80 point.

According to the present invention, there is provided a thermally conductive thermoplastic pressure sensitive adhesive composition, which has excellent heat resistant retention force, follows to even complicated shape, and has higher thermal conductivity as compared with a generally used thermally conductive sticky sheet as well as excellent disassembling property.

In addition, according to the present invention, heat of a heat generation member can be uniformed in a surface direction, because the thermally conductive thermoplastic pressure sensitive adhesive composition coated under heating has high thermal conductivity in a surface direction.

In addition, the thermally conductive thermoplastic pressure sensitive adhesive composition of the present invention, because of being capable of showing semi-electrically conductive property, can express function of static protection or absorption of electromagnetic wave, in addition to function as a thermally conductive material.

Other objects, features and characteristics of the present invention will become apparent by taken into consideration of the preferable embodiments to be exemplified in the following description.

### BEST MODE FOR CARRYING OUT THE INVENTION

The present invention is a thermally conductive thermoplastic pressure sensitive adhesive composition characterized by having, as essential components: (A) liquid rubber; (B) at least either of styrene-based rubber and an amorphous olefin-based resin; (C) a tackifier resin; and (D) graphite, where formulation amount of graphite of the (D) component is in a range of from 30 to 75% by mass relative to total mass of the composition.

Explanation will be given below specifically on constitutional components of the thermally conductive thermoplastic pressure sensitive adhesive composition of the present invention.

### [(A) Liquid rubber]

Liquid rubber, as (A) component used in the present invention, is not especially limited, as long as it is one showing fluidity at normal temperature (20 to 25°C), and as a specific example thereof, there is preferably included polyisoprene, polybutadiene, polybutene, a random copolymer of styrene-isoprene, a random copolymer of styrene-butadiene, a random copolymer of butadiene-isoprene, a block copolymer of butadiene-isoprene, a (co)polymer obtained by hydrogenating or partly hydrogenating the above liquid rubber, or a modified product thereof or the like. Such liquid rubber may be used alone or may be used as a mixture form of two or more kinds. Among these, liquid hydrogenated polyisoprene and liquid polybutene are more preferable.

In the case where the liquid rubber is hydrogenated, hydrogenation degree thereof is preferably from 70 to 100%, and more preferably from 80 to 98%. It should be noted that, in the present invention, as the hydrogenation degree, value calculated by measuring iodine value should be adopted.

Molecular weight of the liquid rubber is not especially limited as long as it is one showing fluidity at normal temperature, however, one having a weight average molecular weight of preferably from 500 to 100,000, more preferably from 5,000 to 80,000, and still more preferably from 20,000 to 60,000 is preferable, in view of providing good balance between heat resistant holding force and fluidity in coating under heating of a thermally conductive thermoplastic pressure sensitive adhesive composition. It should be noted that, in the present invention, as the weight average molecular weight, value measured by a GPC (Gel Permeation Chromatography) method, using polystyrene as a standard substance, should be adopted.

Formulation amount of the liquid rubber is preferably set in a range of preferably from 10 to 40% by mass, more preferably from 12.5 to 37.5% by mass and still more preferably from 15 to 35% by mass relative to total mass of the composition.

The formulation amount of the liquid rubber of below 10% by mass relative to total mass of the composition, may provide inferior fluidity as the thermoplastic pressure sensitive adhesive composition in certain cases, and also tends to provide inferior tackiness at a normal temperature region. In addition, the formulation amount of the liquid rubber of over 40% by mass tends to raise a problem of providing too low heat resistant retention force at a high temperature region such as equal to or higher than 80°C, and not providing sufficient heat resistant retention force.

### [(B) Styrene-based rubber and an amorphous olefin-based resin]

Styrene-based rubber of (B) component used in the present invention, is preferably a block copolymer having at least a block obtained by polymerization of a styrene monomer and a block obtained by polymerization of a rubber monomer, and is preferably a solid one showing rubber elasticity at room temperature (25°C). Morphology of the block in the styrene-based rubber is not especially limited, and may be any of a linear diblock, a linear triblock, or a star-type blocketc.. As a specific example of the styrene-based rubber, for example, there is included a diblock copolymer of styrene-butadiene(SB), a diblock copolymer of α-methylstyrene-butadiene, a triblock copolymer of styrene-butadiene-styrene (SBS), a triblock copolymer of α-methylstyrene-butadiene-α-methylstyrene, a star type block copolymer of styrene-butadiene, a diblock copolymer of styrene-isoprene (SI), a triblock copolymer of styrene-isoprene-styrene (SIS), a star-type block copolymer of styrene-isoprene, a block copolymer of styrene-ethylene/butylene (SEB) produced by hydrogenation of SB, a triblock copolymer of styrene-ethylene/butylene-styrene (SEBS) produced by hydrogenation of SBS, a hydrogenation product of a styrene-butadiene star-type block copolymer, a block copolymer of styrene-ethylene/propylene (SEP) produced by hydrogenation of SI, a block copolymer of styrene-ethylene/propylene-styrene (SEPS) produced by hydrogenation of SIS, a hydrogenation product of a styrene-isoprene star-type block copolymer, or a modified product of a diblock copolymer as described above, a modified product of a triblock copolymer as described above, or a modified product of a star-type block copolymer as described above, etc.. Such styrene-based rubber may be used alone or may be used as a mixture of two or more kinds. Among these, SEBS and SEPS are more preferable.

Content of Styrene in the styrene-based rubber is not especially limited, however, in view of showing rubber elasticity at room temperature, it is preferably from 10 to 50% by mass, and more preferably from 15 to 45% by mass. It should be noted that, in the present invention, as the content of styrene, value obtained by preparing a calibration curve by measuring refractive index with an Abbe Refractometer and converted by the calibration curve should be adopted.

Weight average molecular weight of the styrene-based rubber is also not especially limited, however, in view of showing rubber elasticity at room temperature, it is preferably from 40,000 to 350,000, and more preferably from 60,000 to 200,000.

An amorphous olefin-based resin used in the present invention is not especially limited as for kind of the resin, monomer composition in the resin, or molecular weight of the resin or the like, as long as it is amorphous. As a specific example thereof, for example, there is included amorphous polyethylene, amorphous polypropylene, amorphous poly(1-butene), an amorphous copolymer of ethylene-propylene, an amorphous copolymer of ethylene-1-butene, an amorphous copolymer of propylene-1-butene, or an amorphous terpolymer of ethylene-propylene-1-butene or the like. These amorphous olefin-based resins may be selected as appropriate, depending on liquid rubber to be combined, a tackifier resin, and kind or formulation ratio of graphite, or required workability, and is not especially limited, however, among these an amorphous copolymer of ethylene-propylene or an amorphous terpolymer of ethylene-propylene-1-butene or the like can be used suitably, from reason of compatibility, supply stability or quality stability. These amorphous olefin-based resins may be used alone or as a mixture of two or more kinds. In addition, in the present invention, the styrene-based rubber and the amorphous olefin-based resin may be used in combination as (B) component of the present invention.

Formulation amount of at least either of the styrene-based rubber and the amorphous olefin-based resin is preferably from 2 to 30% by mass, more preferably from 3 to 25% by mass, and still more preferably from 4 to 20% by mass relative to total mass of the composition. The formulation amount of at least either of the styrene-based rubber and the amorphous olefin-based resin of below 2% by mass relative to total mass of the composition, may provide too low cohesive force of the thermally conductive thermoplastic pressure sensitive adhesive composition of the present invention in some cases. The formulation amount of at least either of the styrene-based rubber and the amorphous olefin-based resin of over 30% by mass increases viscosity of the thermally conductive thermoplastic pressure sensitive adhesive composition of the present invention, which may lower fluidity in coating under heating of the thermally conductive thermoplastic pressure sensitive adhesive composition of the present invention in some cases.

In addition, in the case where the styrene-based rubber and the amorphous olefin-based resin are used in combination, mass ratio of the styrene-based rubber and the amorphous olefin-based resin is not especially limited, however, it is preferably from 99:1 to 1:99, and more preferably from 90:10 to 10:90.

### [(C) A tackifier resin]

A tackifier resin of the (C) component used in the present invention is not especially limited, and conventionally known one may be used. As a specific example thereof, for example, there is preferably included an aliphatic-based petroleum resin, an alicyclic-based hydrocarbon resin, an aromatic petroleum resin, a completely hydrogenated aliphatic-based petroleum resin, a completely hydrogenated alicyclic-based hydrocabon resin, a completely hydrogenated aromatic petroleum resin, a partly hydrogenated aliphatic-based petroleum resin, a partly hydrogenated alicyclc-based hydrocarbon resin, a partly hydrogenated aromatic petroleum resin, a terpene resin, a terpene-phenol resin, a hydrogenated terpene resin, a coumarone-indene resin, a rosin resin, an epoxy resin, a phenol resin, or a modified resin thereof or the like. These tackifier resins may be used alone or as a mixture of two or more kinds. Among these, an alicyclic-based hydrocarbon resin, a hydrogenated alicyclic-based hydrocarbon resin, a terpene-phenol resin and hydrogenated terpene resin are more preferable.

Formulation amount of the tackifier resin is preferably from 5 to 25% by mass, more preferably from 7.5 to 22.5% by mass, and still more preferably from 10 to 20% by mass relative to total mass of the composition. The formulation amount of the tackifier resin of below 5% by mass may decrease tackiness of the thermally conductive thermoplastic pressure sensitive adhesive composition of the present invention in some cases. The formulation amount of the tackifier resin of over 25% by mass may decrease flexibility of the thermally conductive thermoplastic pressure sensitive adhesive composition of the present invention, at low temperature region such as equal to or lower than -25°C in some cases.

In addition, in view of heat resistant retention force, tackiness and flexibility at low temperature region such as equal to or lower than -25°C, softening point of the tackifier resin is preferably from 100 to 155°C, and more preferably from 110 to 150°C. It should be noted that, in the present invention, as the softening point, value measured by a method described in JIS K6863 should be adopted.

### [(D) Graphite]

Graphite of the (D) component used in the present invention, is not especially limited, and those with various morphologies may be used. As a specific example thereof, for example, there is included natural graphite, artificial graphite, or exfoliative graphite or the like. These graphites may be used alone or as a mixture of two or more kinds.

In particular, among these graphites, artificial graphite has high purity, and has low ash content, which causes wear of a pump or a nozzle or the like, therefore it can be suitably used in coating under heating, by using an applicator containing a melting tank, thermal insulation hose and a coating nozzle.

Shape of the graphite is not especially limited, however, use of scale-like, needle-like shape or a mixture thereof is preferable because of providing good balance of heat resistant retention force and fluidity in coating under heating of the thermally conductive thermoplastic pressure sensitive adhesive composition of the present invention. In addition, particles having such a shape can be used suitably also in view of thermal conductivity, because of making contact among graphite particles themselves easy, inside a binder, which fulfills a role of having graphite particles contacted themselves.

Dibutyl phthalate (DBP) oil absorption amount of the graphite is preferably from 30 to 200 ml/100g, more preferably from 50 to 160 ml/100g, and still more preferably from 60 to 140 ml/100g. The DBP oil absorption amount of below 30 ml/100g tends to make bleed of binder components easy and lower heat resistant retention force, while the amount of over 200 ml/100g tends to increase viscosity of the composition of the present invention, and tends to lower fluidity in coating under heating of the composition of the present invention.
It should be noted that, in the present invention, as the DBP oil absorption amount, value measured by a method in Examples to be described later should be adopted.

Particle diameter of graphite used in the present invention is not especially limited, and may be selected as appropriate, so as to be suitable to objectives, in consideration of shape of a nozzle or a die coater for coating the thermally conductive thermoplastic pressure sensitive adhesive composition of the present invention, coating thickness with a roll coating or the like. However, in view of thermal conductivity of the composition of the present invention, or fluidity in coating under heating of the composition of the present invention, average particle diameter measured by a laser diffraction method is preferably from 0.5 to 250 µm, more preferably from 1 to 200 µm, and still more preferably from 5 to 150 µm.

The average particle diameter of graphite measured by a laser diffraction method of below 0.5 µm tends to increase viscosity of the thermally conductive thermoplastic pressure sensitive adhesive composition of the present invention, decrease fluidity of the composition of the present invention in coating under heating, and tends to decrease thermal conductivity of the composition of the present invention, while the average particle diameter of over 250 µm tends to decrease heat resistant retention force of the composition of the present invention, although provides good thermal conductivity of the composition of the present invention.

Average aspect ratio of graphite used in the present invention is preferably from 1.2 to 20, more preferably from 1. 5 to 10, and still more preferably from 2 to 5. The average aspect ratio of below 1.2 tends to decrease thermal conductivity of the thermally conductive thermoplastic pressure sensitive adhesive composition of the present invention, and in addition, tends to decrease anisotropy of thermal conductivity of the composition of the present invention in coating under heating. In addition, the aspect ratio of over 20 increases anisotropy of thermal conductivity of the composition of the present invention in coating under heating, however, increases viscosity of the composition of the present invention, and tends to decrease fluidity in coating under heating.

It should be noted that, in the present invention, "average aspect ratio" means average value of aspect ratio determined by taking a photograph of graphite with an electron microscope, and determined from images of 50 graphite particles extracted randomly, and the aspect ratio represents ratio for the maximal length to vertical length for maximal length of each image of the graphite particles, that is, needle degree of graphite determined by an equation of aspect ratio=a maximal length/vertical length for the maximal length.

Formulation amount of the graphite is from 30 to 75% by mass, preferably from 35 to 65% by mass, and more preferably from 40 to 60% by mass relative to total mass of the composition. The formulation amount of below 30% by mass may provide insufficient thermal conductivity obtained in some cases, while the formulation amount of over 75% by mass may decrease fluidity in making the composition of the present invention, and may provide insufficient workability in some cases.

The thermally conductive thermoplastic pressure sensitive adhesive composition of the present invention may include other additives within a range not to impair performance thereof. As a specific example of the additives, there may be included conventionally known additives, for example, a flame retardant, a dispersing agent, an anti-oxidizing agent, an anti-aging agent, a stabilizing agent or the like.

Formulation amount of the additives is preferably from 0.1 to 40% by mass, and more preferably from 0.3 to 30% by mass, relative to total mass of the composition as 100% by mass

A method for producing the thermally conductive thermoplastic pressure sensitive adhesive composition of the present invention is not especially limited, and a conventionally known method may be adopted. Specifically, for example, there is included a method for sequentiallymixing the (A) component to (D) component; a method for stirring and mixing the (A) component to (C) component, and then adding the (D) component to the resulting mixture; or a method for mixing the (A) component to (D) component all at once; or the like. However, in view of enhancing dispensability of graphite of the (D) component, a method for producing the composition of the present invention by first stirring and mixing the (A) component to (C) component, and then adding graphite of the (D) component to the resulting mixture, is preferable.

Thermal conductivity in a coating surface direction, in the case where the thermally conductive thermoplastic pressure sensitive adhesive composition of the present invention obtained by such a method is coated under heating, is preferably equal to or higher than 0.8 W/m·K, and more preferably equal to or higher than 1.0 W/m·K. By setting the thermal conductivity in the above range, temperature uniformity etc. of an adherend such as a glass panel can be obtained, in applications where slight temperature difference influences performance such as view quality or the like, such as a plasma display. The upper limit of the thermal conductivity is not especially limited, however, it is preferable to be equal to or lower than 30 W/m·K, and more preferably equal to or lower than 20 W/m·K. It should be noted that, in the present invention, as the thermal conductivity, value measured by a method in Examples to be described later should be adopted.

In the case where the thermally conductive thermoplastic pressure sensitive adhesive composition of the present invention is coated onto a heat generation member such as a glass panel, it is preferable to coat so that thermal conductivity shows anisotropy in the coating surface direction and in a vertical direction to the coating surface direction. Specifically, it is preferable that thermal conductivity in the coating surface direction of a heat generation member such as a glass panel is higher than thermal conductivity in a vertical direction to the coating surface direction, and more preferably, thermal conductivity in the coating surface direction is 1.3 to 20 times thermal conductivity in a vertical direction to the coating surface direction. In this way, by having anisotropy in thermal conductivity, in a coating surface of the composition of the present invention, surface temperature of a member such as a glass panel can be made uniform more quickly.

To express such anisotropy of thermal conductivity, it is enough to give shear stress necessary for graphite to orient, to the thermally conductive thermoplastic pressure sensitive adhesive composition, in coating under heating of the thermally conductive thermoplastic pressure sensitive adhesive composition of the present invention. Such a coating method is not especially limited, and specifically, for example, there is included a bead coating method under transferring, the positions of a coating nozzle and a coating surface such as a glass panel, relatively in a surface direction; or a coating method by deforming the thermally conductive thermoplastic pressure sensitive adhesive composition of the present invention, in a horizontal direction of a coating surface, such as a coating method by a roll coating method under speed difference between peripheral speed of a coating roll and a transfer speed of the coating surface. In addition, such a method may also be adopted as a method for giving shear stress to the thermally conductive thermoplastic pressure sensitive adhesive composition of the present invention, such as the above, that one coated with the thermally conductive thermoplastic pressure sensitive adhesive composition of the present invention, for example, to a block-like or sheet-like shape, or one formed with the thermally conductive thermoplastic pressure sensitive adhesive composition of the present invention, for example, to a sheet-like shape, is treated to pass through once or twice or more between two pair-rolls having specified gap, so as to stretch the thermally conductive thermoplastic pressure sensitive adhesive composition.

Volume resistivity of the thermally conductive thermoplastic pressure sensitive adhesive composition of the present invention is preferably from 10² to 10¹⁴ Ω·cm, and more preferably from 10³ to 10¹⁹ Ω·cm. The volume resistivity of below 10² Ω · cm decreases efficiency in converting electromagnetic wave to heat, in injection of electromagnetic wave generated in electronics devices and the like, into the thermally conductive thermoplastic pressure sensitive adhesive composition of the present invention, and tends to decrease absorption amount of electromagnetic wave, while the volume resistivity of over 10¹⁴ Ω·cm tends to decrease antistatic property. It should be noted that, in the present invention, as the volume resistivity, value measured by a method in Examples to be described later should be adopted.

Asker C hardness at 23°C of the thermally conductive thermoplastic pressure sensitive adhesive composition of the present invention is preferably equal to or lower than 80 point, and more preferably equal to or lower than 75 point. The lower limit is not especially limited, however, it is preferably equal to or higher than 10 point, andmorepreferably equal to or higher than 15 point. The Asker C hardness of over 80 point tends to make a glass panel of a plasma display or the like, which is relatively weak to impact from outside after lamination, more easily fractured during transportation or in use. It should be noted that, in the present invention, as the Asker C hardness, value measured by a method in Examples to be described later should be adopted.

A coating method of the thermally conductive thermoplastic pressure sensitive adhesive composition of the present invention is not especially limited, and a method enabling to substantially fill void between a heat generation member, and a radiator plate or a housing or the like may be enough. For example, in the case of coating uniformly on to a member with a flat surface such as a glass panel of a plasma display, use of a curtain coater or a roll coater enables uniform coating to all of or a part of the surface of the glass panel. In addition, in the case where coating in a specified shape such as a dot-like, a bead-like, a spiral-like shape is necessary, use of an applicator containing a melting tank, thermal insulation hose and a coating nozzle, enables coating to a necessary place from a nozzle with an arbitrary shape. In coating, it is preferable to heat in advance the composition of the present invention, so as to be at preferably from 150 to 220°C, and more preferably from 170 to 200°C.

It is preferably that lamination of a adherend, which is coated with the thermally conductive thermoplastic pressure sensitive adhesive composition of the present invention, is executed as quickly as possible after coating. However, because the thermally conductive thermoplastic pressure sensitive adhesive composition of the present invention has tackiness even at normal temperature, lamination is possible within a range of process takt, without re-heating the composition of the present invention, if under a usual work environment carried out by a worker.

In laminating, for example, a glass panel of a plasma display and a metal frame by using the thermally conductive thermoplastic pressure sensitive adhesive composition of the present invention, it is preferable to set temperature of the thermally conductive thermoplastic pressure sensitive adhesive composition, so that Asker C hardness of the thermally conductive thermoplastic pressure sensitive adhesive composition just before lamination, is equal to or lower than 50 point. By such temperature control of the thermally conductive thermoplastic pressure sensitive adhesive composition, lamination under lower pressure becomes possible.

The thermally conductive thermoplastic pressure sensitive adhesive composition of the present invention expresses high heat resistant retention force and excellent thermal conductivity from just after lamination, however, in order to enhance these further, there may be added a process for heating the composition of the present invention and/or surface of a adherend just before lamination, or a process for warming and aging panels laminated, after lamination.

The thermally conductive thermoplastic pressure sensitive adhesive composition of the present invention may be coated in an arbitrary shape on a plastic film or paper or the like, having mold-releasing property, which was treated in advance with a fluorine resin such as polytetrafluoroethylene, a silicone resin, analkylpendant-based resin, a condensed wax-based resin or the like, by using a conventionally known apparatus such as a die coater or a press machine, and then it may be used by transcribing to a place to be laminated.

The thermally conductive thermoplastic pressure sensitive adhesive composition of the present invention can exert the excellent thermal conductivity not attainable in the case of using aluminum hydroxide or spherical alumina in the same filling ratio, by containing suitable amount of graphite, which is a thermally conductive filler with high aspect ratio, such as scale-like or needle-like shape, as well as can produce at lower price as compared with pressure sensitive adhesives containing ceramics, because expensive ceramics is not required.

The thermally conductive thermoplastic pressure sensitive adhesive composition of the present invention does not contain a cross-linking agent and exhibits thermoplastic property, therefore, by warming a structure body laminated by using the thermally conductive thermoplastic pressure sensitive adhesive composition of the present invention, at higher temperature than practical use temperature region (equal to or higher than about 120°C), it has an advantage of enabling to be more easily disassembled as compared with a structure laminated by using a pressure sensitive adhesive tape containing a cross-linking agent and acryl-based pressure sensitive adhesives.

### EXAMPLES

Explanation will be given below with reference to specific Examples, however, the present invention should not be limited to these examples. It should be noted that "parts" and "%" in the description mean, unless otherwise specified, "parts by mass" and "% by mass", respectively.

### (EXAMPLE 1)

After preheating a heating kneader at 180°C, there were charged 600 parts of Kraprene (trade name) LIR-290 of liquid rubber (liquid-like hydrogenated polyisoprene rubber, manufactured by Kraray Co., Ltd., with a weigh average molecular weight of 25, 000 and a hydrogenation ratio of about 90%), 200 parts of Kraton (trade name) G1650 of styrene-based rubber, (SEBS, manufactured by Kraton Polymer Japan Co. , Ltd. , withstyrene/(ethylene-butylene) ratio=29/71, in mass ratio), 200 parts of YS Polystar T145 of a tackifier resin (a terpene phenol resin, manufactured by Yasuhara Chemical Co., Ltd.; a softening point of 145°C), and 10 parts of IRGANOX 1010 (a hindered amine-based anti-aging agent, manufactured by Chiba Specialty Chemicals Co. , Ltd.), and mixed at 180°C for 4 hours, and after confirming melting of each material, 826 parts of E015, as graphite, (artificial graphite, manufactured by Chuetsu Graphite Works Co., Ltd., having an average particle diameter, measured by a laser diffraction method, of about 135 µm, and an average aspect ratio of 3.4) was charged, and still more after mixing at 180°C for 1 hour, the mixture was subjected to defoaming under reduced pressure for 10 minutes to obtain a thermally conductive thermoplastic pressure sensitive adhesive composition with a formulation amount of graphite of about 45% by mass.

### (EXAMPLE 2)

By a similar method to in Example 1, except that 100 parts of Kraton (trade name) G1726, as styrene-based rubber, (SEBS, manufactured by Kraton Polymer Japan Co., Ltd., with styrene/(ethylene-butylene) ratio=30/70, in mass ratio, and 70% diblock) was used, and amount of YS Polystar T145 of a tackifier resin, was changed to 300 parts, a thermally conductive thermoplastic pressure sensitive adhesive composition with a formulation amount of graphite of about 45% by mass was obtained.

### (EXAMPLE 3)

By a similar method to in Example 2, except that UF-G30 (artificial graphite, manufactured by Showa Denko K. K., having an average particle diameter, measured by a laser diffraction method, of about 10 µm, and an average aspect ratio of 3. 6) was used as graphite, instead of E015, a thermally conductive thermoplastic pressure sensitive adhesive composition with a formulation amount of graphite of about 45% by mass was obtained.

### (EXAMPLE 4)

By a similar method to in Example 2, except that 300 parts of YS Polystar T115 (a terpene phenol resin, manufactured by Yasuhara Chemical Co., Ltd., with a softening point of 115°C) was used as a tackifier resin, instead of YS Polystar T145, a thermally conductive thermoplastic pressure sensitive adhesive composition with a formulation amount of graphite of about 45% by mass was obtained.

### (COMPARATIVE EXAMPLE 1)

By a similar method to in Example 1, except that 300 parts of Dyana Process Oil NS-100 of a softening agent, (naphthenic process oil, manufactured by Idemitsu Kosan Co., Ltd., with a dynamic viscosity at 40°C of 102.7 mm²/s) was used instead of liquid rubber, and still more amount of Kraton (trade name) G1650 of styrene-based rubber, was changed to 300 parts, and amount of YS Polystar T145, as a tackifier resin, was changed to 400 parts, a thermally conductive thermoplastic pressure sensitive adhesive composition with a formulation amount of graphite of about 45% by mass was obtained.

### (COMPARATIVE EXAMPLE 2)

By a similar method to in Example 2, except that HIGILITE (registered trade name) H-42M (aluminum hydroxide, manufactured by Showa Denko K. K. , having an average particle diameter, measured by a laser diffraction method, of 1.1 µm) was used instead of graphite, a thermally conductive thermoplastic pressure sensitive adhesive composition with a formulation amount of aluminum hydroxide of about 45% by mass was obtained.

### (COMPARATIVE EXAMPLE 3)

By a similar method to in Example 2, except that AX-116 (spherical alumina, manufactured by MICRON Co., Ltd., having an average particle diameter, measured by a laser diffraction method, of 20 µm) was used instead of graphite, a thermally conductive thermoplastic pressure sensitive adhesive composition with a formulation amount of spherical alumina of about 45% by mass was obtained.

### (COMPARATIVE EXAMPLE 4)

By a similar method to in Comparative Example 3, except that amount of AX-116 was changed to 1652 parts, a thermally conductive thermoplastic pressure sensitive adhesive composition with a formulation amount of spherical alumina of about 62% by mass was obtained.

### (COMPARATIVE EXAMPLE 5)

To 1000 parts of Oribain BPS5107-1 of an acryl-based pressure sensitive adhesives, (manufactured by Toyo Ink Mfg. Co. , Ltd. ; a solid content of 42% by mass), 20 parts of Sumidur (registered trade name) L-55E, as a cross-linking agent, (polyisocyanate, manufactured by Sumika Bayer Urethane Co., Ltd. ; a solid content of 55% by mass), and 273 parts of methyl ethyl ketone, as a diluents, were added, and after stirring at from 20 to 25°C for 1 hour, 431 parts of AX-116 was added and stirred at from 20 to 25°C for 30 minutes with a stirrer. Then, this solution was coated onto a separator at from 20 to 25°C, so that thickness after drying is 1 mm, and dried at normal temperature (from 20 to 25°C) for 24 hours, and then dried at 40°C for 2 hours to obtain a pressure sensitive adhesive tape.

### (EXAMPLE 5)

After preheating a heating kneader at 180°C, there were charged 250 parts of Kraprene (trade name) LIR-290 of liquid rubber, (liquid-like hydrogenated polyisoprene rubber, manufactured by Kraray Co., Ltd., with a weigh average molecular weight of 25, 000 and a hydrogenation ratio of about 90%), 250 parts of Eastoflex (trade name) E1060PL of an amorphous olefin-based resin, (an amorphous ethylene-propylene copolymer, manufactured by Eastman Chemical Co., Ltd.; a softening point of 135°C), 300 parts of Escorez (registered trade name) 5340 of a tackifier resin, (a hydrogenated alicyclic-based hydrocarbon resin, manufactured by Tonex Co., Ltd.; a softening point of 137°C, Brookfield viscosity at 190°C of about 6,000 mPa·s), and 10 parts of IRGANOX (registered trade name) 1010 (a hindered amine-based anti-aging agent,manufactured by ChibaSpecialty Chemicals Co., Ltd.), and mixed at 180°C for 4 hours, and after confirmingmelting of each material, 826 parts of UF-g30, as graphite was charged, and still more after mixing at 180°C for 1 hour, the mixture was subj ected to defoaming under reduced pressure for 10 minutes to obtain a thermally conductive thermoplastic pressure sensitive adhesive composition with a formulation amount of graphite of about 50.5% by mass.

### (EXAMPLE 6)

By a similar method to in Example 5, except that Eastoflex (trade name) E1200PL was used instead of Eastoflex (trade name) E1060PL, as an amorphous olefin-based resin, a thermally conductive thermoplastic pressure sensitive adhesive composition with a formulation amount of graphite of about 50.5% by mass was obtained.

### (EXAMPLE 7)

By a similar method to in Example 5, except that E015 (artificial graphite, manufactured by Chuetsu Graphite Works Co., Ltd., having an average particle diameter, measured by a laser diffraction method, of about 135 µm, and an average aspect ratio of 3.4) was used instead of UF-G30, as graphite, a thermally conductive thermoplastic pressure sensitive adhesive composition with a formulation amount of graphite of about 50.5% by mass was obtained.

### (EXAMPLE 8)

By a similar method to in Example 5, except that 250 parts of Bestplast828 (an amorphous terpolymer of ethylene-propylene-1-butene, manufactured by Degussa AG; a softening point of 161°C, Brookfield viscosity at 190°C of about 25, 000 mPa·s) was used instead of Eastoflex (trade name) E1060PL, as an amorphous olefin-based resin, a thermally conductive thermoplastic pressure sensitive adhesive composition with a formulation amount of graphite of about 50.5% by mass was obtained.

### (EXAMPLE 9)

By a similar method to in Example 5, except that 300 parts of ARKON P-140 (an alicyclic-based hydrocarbon resin, manufactured by Arakawa Chemical Industries co., Ltd.; a softening point of 140°C) was used instead of Escorez (registered trade name) 5340, as a tackifier resin, a thermally conductive thermoplastic pressure sensitive adhesive composition with a formulation amount of graphite of about 50.5% by mass was obtained.

### (COMPARATIVE EXAMPLE 6)

By a similar method to in Example 5, except that HIGILITE (registered trade name) H-42M was used instead of graphite, a thermally conductive thermoplastic pressure sensitive adhesive composition with a formulation amount of aluminum hydroxide of about 50.5% by mass was obtained.

### (COMPARATIVE EXAMPLE 7)

By a similar method to in Example 5, except that AX-116 was used instead of graphite, a thermally conductive thermoplastic pressure sensitive adhesive composition with a formulation amount of spherical alumina of about 50.5% by mass was obtained.

### (COMPARATIVE EXAMPLE 8)

By a similar method to in Comparative Example 7, except that amount of AX-116 was changed to 1652 parts, a thermally conductive thermoplastic pressure sensitive adhesive composition with a formulation amount of spherical alumina of about 67.1% by mass was obtained.

### (COMPARATIVE EXAMPLE 9)

By a similar method to in Example 5, except that 250 parts of JCT OIL B of a softening agent, (naphthenic process oil, manufactured by Japan Chemtech Ltd.; a dynamic viscosity at 40°C of 104.3 mm²/s) was used instead of liquid rubber, a thermally conductive thermoplastic pressure sensitive adhesive composition with a formulation amount of graphite of about 50.5% by mass was obtained.

### (Preparation of a thermally conductive sheet for evaluation)

The thermally conductive thermoplastic pressure sensitive adhesive composition of the present invention has features in that coating to all parts of a flat surface area is possible by using a roll coater, or coating to a necessary area from a nozzle with an arbitrary shape is possible, by using an applicator containing a melting tank, thermal insulation hose and a coating nozzle, however, in the present Example, to supply to tests for various properties and the like, thermally conductive sheets for evaluation, containing the thermally conductive thermoplastic pressure sensitive adhesive composition obtained in the Examples 1 to 9, Comparative Examples 1 to 4 and Comparative Examples 6 to 9, along with a pressure sensitive adhesive tape obtained in Comparative Example 5 were used, and various properties were evaluated.

The thermally conductive sheets for evaluation containing the thermally conductive thermoplastic pressure sensitive adhesive composition were prepared by heating the thermally conductive thermoplastic pressure sensitive adhesive composition at 180°C, coating it on to the separator so that thickness after hot pressing is 1 mm, and hot pressing at 130°C.

It should be noted that the present test method by no means limits a use method of the thermally conductive thermoplastic pressure sensitive adhesive composition of the present invention.

### (Evaluation of various properties)

### (a) DBP oil absorption amount

Dibutyl phthalate (DBP) oil absorption amount of graphite used in the thermally conductive thermoplastic pressure sensitive adhesive composition was measured according to a B method (a kneading method with a spatula) of JIS K 6221-1975.

### (b) Melt Flow Rate (MFR)

By punching out the thermally conductive sheets for evaluation obtained by the hot press to a rectangle shape with a width of 25 mm and a length of 70 mm, and rolling the resulting rectangle sheet in a length direction, so as not to entrain air bubble, a circular cylinder-like sample with a height of 25 mm was prepared.

Thus prepared circular cylinder-like sample was set into a flow tester (CFT-500D, manufactured by Shimadzu Corp.) and preheated at 180°C for 5 minutes, and then a weight of 49.03 N (5 kgf) was loaded at 180 °C to measure amount of the thermally conductive thermoplastic pressure sensitive adhesive composition extruded per 10 minutes. Unit thereof is "g/10 minutes". It should be noted that cylinder diameter of the flow tester was 10 mm, and a die with a diameter of 1 mm and a length of 10 mm was used.

### (c) Heat resistant retention force

The thermally conductive sheets for evaluation obtained by the hot press was cut out to a width of 2.5 cm and a length of 2.5 cm, and it was placed on an aluminum plate with a width of 2.5 cm, a length of 10 cm and a thickness of 0.5 mm. Another aluminum plate with the same size was put so as to cover an area of the thermally conductive sheet for evaluation, and after lightly pressure bonding at normal temperature, it was pressure bonded by reciprocating a 5 kg rubber roll twice to prepare a test piece. This test piece was vertically set at temperatures of 90 degrees centigrade, under a load of 20 g in a shear direction, to measure time till the load falls down (24 hours in maximal).

### (d) Thermal conductivity

By setting temperature of a melting tank of a hot-melt applicator (manufactured by Fast Corp.) at 200°C, and temperature at a nozzle tip of the hot-melt applicator at 180°C, the thermally conductive thermoplastic pressure sensitive adhesive composition was bead-coated on to an aluminum plate moving at a speed of 10 m/minute, from a fixed nozzle. It should be noted that a nozzle with a diameter of 1 mm was used, and extrusion rate was set at 630 g/minute.

After cooling, the thermally conductive thermoplastic pressure sensitive adhesive composition bead-coated was peeled carefully with a knife, and then a plurality of string-like thermally conductive thermoplastic pressure sensitive adhesive compositions were collected, and arranged in parallel to form a sheet with a thickness of 1 mm.

### (d-1) Thermal conductivity measurement in a thickness direction

The thermally conductive sheet derived from the above bead-coating was punched off to a circle form with a diameter of 50 mm, and thermal conductivity at 23°C was measured, according to ASTM E 1530.

### (d-2) Thermal conductivity measurement in a coating surface direction

Ten thermally conductive sheets derived from the above bead-coating were overlapped, which were then sliced to a thickness of 1 mm, in a vertical direction to a surface direction, and the sliced sheets were punched to a circle form with a diameter of 50 mm, and subjected to measurement of thermal conductivity at 23°C, according to ASTM E 1530.

### (e) Volume resistivity

The thermally conductive sheet for evaluation obtained by hot press was cut to a width of 10 cm and a length of 10 cm, which was hold under atmosphere at 23°C and 50% RH for 24 hours, and then volume resistivity was measured by using ultra insulating resistance/minute ammeter (TR8601, manufactured by Advantest Co., Ltd.).

### (f) Asker C hardness

The thermally conductive sheet for evaluation was prepared similarly to above, except that thickness was changed to 10 mm. The thermally conductive sheet for evaluation was cut to a width of 10 cm and a length of 10 cm, and Asker C hardness at 23°C of the thermally conductive thermoplastic pressure sensitive adhesive composition was measured, according to Standard Procedure, SRIS 0101-1968, of The Society of Rubber Industry, Japan.

### (g) Disassembling property

The thermally conductive sheet for evaluation with a thickness of 1 mm, obtained by hot press, and a pressure sensitive adhesive tape prepared in Comparative Example 5, were cut to a width of 2.5 cm and a length of 2.5 cm, which were put on an aluminum plate with a width of 2.5 cm, a length of 10 cm and a thickness of 0.5 mm. Another aluminum plate with the same size was put so as to cover an area of the thermally conductive sheet for evaluation, or the pressure sensitive adhesive tape, and after lightly pressure bonding at normal temperature, it was pressure bonded by reciprocating a 5 kg rubber roll twice to prepare test pieces.

The resulting test pieces were taken out, after holding for 3 minutes under atmosphere of 120°C, and immediately, both ends of the test pieces were pulled by both hands wearing gloves, to confirm disassembling property. Evaluation criteria was as follows: when two pieces of aluminum plates were easily separated, it was ranked o, while the case requiring strong force in disassembling or disassembling was difficult was ranked ×.

The above property evaluation results, by using the thermally conductive thermoplastic pressure sensitive adhesive compositions obtained in the Examples 1 to 9, Comparative Examples 1 to 4 and Comparative Examples 6 to 9, along with a pressure sensitive adhesive tape obtained in Comparative Example 5, are shown, along with formulation compositions, in Tables 1 to 4.

**Table 1**

| Item | Material Name | Example 1 | Example 2 | Example 3 | Example 4 |
|---|---|---|---|---|---|
| Liquid rubber | LIR290 | 600 | 600 | 600 | 600 |
| Styrene-based rubber | G1650 | 200 | - | - | - |
| | G1726 | | 100 | 100 | 100 |
| Tackifier resin | T-145 | 200 | 300 | 300 | - |
| | T-115 | - | - | - | 300 |
| Graphite (Figure in ( ) shows DBP oil absorption amount)(ml/100g) | E015 (72) | 826 | 826 | - | 826 |
| | UF-G30 (79) | - | - | 826 | - |
| Anti-aging agent | IRGANOX 1010 | 10 | 10 | 10 | 10 |
| MFR (g/10min) | | 4 | 25 | 17 | 18 |
| Heat resistant retention force Fall down time (hr) | | 24< | 24< | 24< | 24< |
| Thermal conductivity (W/m·K) | Thickness direction | 1.0 | 1.0 | 1.0 | 1.0 |
| | Surface direction | 1.5 | 1.5 | 1.5 | 1.5 |
| Volume resistivity (Ω·cm) | | 1×10⁹ | 1×10⁹ | 1×10⁹ | 1×10⁹ |
| Asker C hardness (point) | | 70 | 52 | 72 | 65 |
| Disassembly property | | ○ | ○ | ○ | ○ |

**Table 2**

| Item | Material Name | C.Exam. 1 | C.Exam. 2 | C.Exam. 3 | C.Exam. 4 | C.Exam. 5 |
|---|---|---|---|---|---|---|
| Liquid rubber | LIR290 | - | 600 | 600 | 600 | Acryl-based pressure sensitive adhesive tape |
| Naphthenic oil | NS-100 | 300 | - | - | - | |
| Styrene-based | G1650 | 300 | - | - | - | |
| rubber | G1726 | - | 100 | 100 | 100 | |
| Tackifier resin | T-145 | 400 | 300 | 300 | 300 | |
| Graphite (Figure in ( ) shows DBP oil absorption amount)(ml/100g) | E015 (72) | 826 | - | - | - | |
| Al(OH)₃ | H-42M | - | 826 | - | - | |
| Spherical alumina | AX-116 | - | - | 826 | 1652 | |
| Anti-aging agent | IRGANOX 1010 | 10 | 10 | 10 | 10 | |
| MFR (g/10min) | | 59 | 23 | 94 | 22 | - |
| Heat resistant retention force Fall down time (hr) | | 0.1 | 4 | 24< | 24< | - |
| Thermal conductivity (W/m·K) | Thickness direction | 1.0 | 0.4 | 0.2 | 0.3 | - |
| | Surface direction | 1.5 | 0.4 | 0.2 | 0.3 | - |
| Volume resistivity (Ω·cm) | | 1×10⁹ | 2×10¹⁵ | 6×10¹⁵ | 2×10¹⁵ | - |
| Asker C hardness (point) | | 71 | 62 | 40 | 45 | - |
| Disassembly property | | ○ | ○ | ○ | ○ | × |

| | | | | | | |
|---|---|---|---|---|---|---|
| Note) In Comparative Example 5, other properties are not measured because assembly property was ×. | | | | | | |

**Table 3**

| Item | Material Name | Example 5 | Example 6 | Example 6 | Example 7 | Example 8 |
|---|---|---|---|---|---|---|
| Liquid rubber(A) | LIR290 | 250 | 250 | 250 | 250 | 250 |
| Amorphous olefin-based resin (B) | 828 | - | - | - | 250 | |
| | E1060PL | 250 | - | 250 | - | 250 |
| | E1200PL | - | 250 | - | - | - |
| Tackifier resin (C) | 5340 | 300 | 300 | 300 | 300 | |
| | P-140 | - | - | - | - | 300 |
| Graphite (D) (Figure in ( ) shows DBP oil absorption amount)(ml/100g) | E015 72) | - | - | 826 | - | - |
| | UF-G30 (79) | 826 | 826 | - | 826 | 826 |
| Anti-aging agent | IRGANOX 1010 | 10 | 10 | 10 | 10 | 10 |
| MFR (g/10min) | | 5 | 2 | 40 | 2 | 13 |
| Heat resistant retention force Fall down time (hr) | | 24< | 24< | 24< | 24< | 24< |
| Thermal conductivity (W/m·K) | Thickness direction | 1.0 | 1.0 | 1.0 | 1.0 | 1.0 |
| | Surface direction | 1.5 | 1.5 | 1.5 | 1.5 | 1.5 |
| Volume resistivity (Ω·cm) | | 1×10⁹ | 1×10⁹ | 1×10⁹ | 1×10⁹ | 1×10⁹ |
| Asker C hardness (point) | | 40 | 43 | 22 | 58 | 45 |
| Disassembly property | | ○ | ○ | ○ | ○ | ○ |

**Table 4**

| Item | Material Name | Com.Exam. 6 | Com.Exam. 7 | Com.Exam. 8 | Com.Exam. 9 |
|---|---|---|---|---|---|
| Liquid rubber | LIR290 | 250 | 250 | 250 | - |
| Naphthenic oil | JCT OIL B | - | - | - | 250 |
| Amorphous olefin-based resin (B) | E1060PL | 250 | 250 | 250 | 250 |
| Tackifier resin (C) | 5340 | 300 | 300 | 300 | 300 |
| Graphite (Figure in ( ) is DBP oil absorption amount (ml/100 g) | E015 (72) | - | - | - | 826 |
| Al(OH)₃ | H-42M | 826 | - | - | - |
| Spherical alumina | AX-116 | - | 826 | 1652 | - |
| Anti-aging agent | IRGANOX 1010 | 10 | 10 | 10 | 10 |
| MFR (g/10min) | | 38 | 123 | 37 | 42 |
| Heat resistant retention force Fall down time (hr) | | 6 | 2 | 24< | 1 |
| Thermal conductivity (W/m·K) | Thickness direction | 0.4 | 0.2 | 0.3 | 1.0 |
| | Surface direction | 0.4 | 0.2 | 0.3 | 1.5 |
| Volume resistivity (Ω·cm) | | 2×10¹⁵ | 2×10¹⁵ | 6×10¹⁵ | 1×10⁹ |
| Asker C hardness (point) | | 22 | 14 | 18 | 24 |
| Disassembly property | | ○ | ○ | ○ | ○ |

The thermally conductive thermoplastic pressure sensitive adhesive composition of the present invention contains, as essential components, (A) liquid rubber, (B) at least either of styrene-based rubber and an amorphous olefin-based resin, (C) a tackifier resin and (D) graphite, but in Comparative Examples 1 and 9 not containing liquid rubber, heat resistant retention force evaluated by falling down time is inferior. In addition, in the case where aluminum hydroxide (Comparative Examples 2 and 6) or spherical alumina (Comparative Examples 3, 4, 7 and 8) was used instead of graphite, thermal conductivity was inferior, as compared with the case of using graphite (Examples 1 to 9), and in addition, thermal conductivity showed the same value in a thickness direction and in a surface direction, and thus did not show anisotropy of thermal conductivity. It was confirmed that, in the case of using graphite, thermal conductivity in the coating surface direction is higher by about 1.5 times than that in a thickness direction, and thus shows anisotropy of thermal conductivity. In addition, it was found that use of graphite provided more excellent thermal conductivity, as compared with aluminum hydroxide and spherical alumina. It was found that Comparative Example 5, where a cross-linked acryl-based sticky tape was used, was inferior in disassembly property.

From various examinations, when the graphite used in the present invention is artificial graphite and DBP oil absorption amount thereof is in a range of from 30 to 200 ml/100 g, and average particle diameter measured by a laser diffraction method is in a range of from 0.5 to 250 µm, there is little influence on wear of apparatus or the like, due to high purity and low ash content. In addition, particles themselves in a binder are easily contacted and thus suitable to thermal conduction, which provides good adjustment of valance among bleed of binder components, heat resistant retention force, viscosity and fluidity; and the composition of the present invention, formulated with liquid rubber, at least either of styrene-based rubber and an amorphous olefin-based resin, and a tackifier resin, is flexible and enables to have a thermal conductivity of equal to or higher than 0.8 W/m·K in a coated surface direction in the case of coating under heating, and provide a pressure sensitive adhesive layer excellent in heat radiation property and having anisotropy of thermal conductivity.

It has been clarified from the above Examples that a thermally conductive thermoplastic pressure sensitive adhesive composition of the present invention containing, as essential components, (A) liquid rubber, (B) at least either of styrene-based rubber and an amorphous olefin-based resin, (C) a tackifier resin and (D) graphite, is excellent in heat resistant retention force and thermal conductivity, and is also easy in disassembly by heating.

From the above advantage, the thermally conductive thermoplastic pressure sensitive adhesive composition of the present invention can be used for lamination of a glass panel of a plasma display and a metal frame, and in addition, has excellent effect that it can disassemble easily by meting under heating. In addition, the thermally conductive thermoplastic pressure sensitive adhesive composition of the present invention can reduce industrial waste such as a separator, and also in the case of incineration of the thermally conductive thermoplastic pressure sensitive adhesive composition of the present invention, when becoming unnecessary, it has also excellent effect in view of environmental load of enabling to incinerate without generation of any residue, by using a incineration furnace which can heat up to equal to or higher than 800°C.

## Claims

1. A thermally conductive thermoplastic pressure sensitive adhesive composition **characterized by** comprising, as essential components:
(A) liquid rubber;
(B) at least either of styrene-based rubber and an amorphous olefin-based resin;
(C) a tackifier resin; and
(D) graphite, where formulation amount of graphite of said (D) component is in a range of from 30 to 75% by mass relative to total mass of the composition.

2. The thermally conductive thermoplastic pressure sensitive adhesive composition according to claim 1, **characterized in that** formulation amount of liquid rubber of said (A) component is in a range of from 10 to 40% by mass relative to total mass of the composition.

3. The thermally conductive thermoplastic pressure sensitive adhesive composition according to claim 1 or 2, **characterized in that** graphite of (D) component is artificial graphite.

4. The thermally conductive thermoplastic pressure sensitive adhesive composition according to any one of claims 1 to 3, **characterized in that** dibutyl phthalate oil absorption amount of graphite of said (D) component is in a range of from 30 to 200 ml/100 g.

5. The thermally conductive thermoplastic pressure sensitive adhesive composition according to any one of claims 1 to 4, **characterized in that** average particle diameter of graphite of said (D) component measured by a laser diffraction method is from 0.5 to 250 µm.

6. The thermally conductive thermoplastic pressure sensitive adhesive composition according to any one of claims 1 to 5, **characterized in that** average aspect ratio of graphite of said (D) component is from 1.2 to 20.

7. The thermally conductive thermoplastic pressure sensitive adhesive composition according to any one of claims 1 to 6, **characterized in that** thermal conductivity at 23°C in a coating surface direction is equal to or higher than 0.8 W/m·K, in the case where said thermally conductive thermoplastic pressure sensitive adhesive composition is coated under heating.

8. The thermally conductive thermoplastic pressure sensitive adhesive composition according to any one of claims 1 to 7, **characterized in that** thermal conductivity of said thermally conductive thermoplastic pressure sensitive adhesive composition shows anisotropy in the coating surface direction and in a vertical direction to said coating surface direction, in the case where said thermally conductive thermoplastic pressure sensitive adhesive composition is coated under heating, and thermal conductivity in said coating surface direction is higher than thermal conductivity in a vertical direction to said coating surface.

9. The thermally conductive thermoplastic pressure sensitive adhesive composition according to any one of claims 1 to 8, **characterized in that** volume resistivity is from 10² to 10¹⁴ Ω·cm.

10. The thermally conductive thermoplastic pressure sensitive adhesive composition according to any one of claims 1 to 9, **characterized in that** Asker C hardness at 23°C is equal to or lower than 80 point.
